# EUROPEAN PATENT SPECIFICATION

(11) **EP 1 270 169 B1**
(45) Date of publication and mention of the grant of the patent: **21.07.2004**
(21) Application number: 02012812.0
(22) Date of filing: 10.06.2002
(51) Int. Cl.: B29C 45/26, B29C 45/14, B29D 23/00, B29L 23/22, B29C 37/00

(54) **Process for injection moulding a connection pipe as well as the connection pipe**
Verfahren zum Spritzgiessen eines Rohres sowie das Rohr
Procédé pour la moulage par injection d'un tube ainsi que le tube

(30) Priority: 27.06.2001 LU 90796
(43) Date of publication of application: 02.01.2003
(73) Proprietor: Delphi Technologies, Inc., Troy, MI 48007 (US)
(72) Inventor: Bart, Stéphane, 08430 Launois/Vence (FR)
(74) Representative: Beissel, Jean

(56) References cited:
- EP-A- 1 188 976
- WO-A-92/01546
- DE-A- 19 902 430
- US-A- 4 873 043
- PATENT ABSTRACTS OF JAPAN vol. 1996, no. 09, 30 September 1996 (1996-09-30) -& JP 08 132476 A (SEKISUI CHEM CO LTD), 28 May 1996 (1996-05-28)

## Description

### Field of the invention

The present invention generally relates to a process for injection moulding a connection pipe, such as e.g. a connection pipe for a radiator of an engine cooling circuit.

### Background of the invention

A radiator for an internal combustion engine generally comprises a rectangular radiator block made of aluminium, which is composed of a network of jointed pipes and of fins for heat exchange between the cooling fluid of the engine cooling circuit circulating therein and air flowing therethrough. Two shell tanks are mounted to the lateral sides of the radiator block. They permit the distribution of the cooling fluid in the radiator block. Such shell tanks are generally made of fiber glass reinforced polyamide and are injection moulded with connection and fixing elements.

Each of the two shell tanks generally has one cylindrical connection pipe, over which a rubber hose of the engine cooling circuit is pulled. To provide a fluidtight connection, an annular bead is provided at the end of the connection pipe. A clamping collar is also used to improve the sealing and secure the rubber hose on the connection pipe.

The quality of manufacture of such connection pipes is important, as a circularity error or the presence of burrs on the outer surface of the pipe will lead to leakage of the cooling circuit at the pipe to hose connection. The determination of circularity or cylindricity of a pipe is typically known as roundness measurement.

Initially, such connection pipes were injection moulded in a mould cavity formed by two mould parts defining a cavity having the outer shape of the pipe and by one internal pin introduced into this cavity. A disadvantage of such an injection moulding process is that the moulded connection pipe exhibits on its outer surface two axially extending seams, which are an evident cause of leakage.

To avoid the presence of such axial seams, it has been proposed to mould the connection pipe in a mould cavity formed by a mould part having a cavity therein―corresponding to the outer shape of the connection pipe―and by an internal pin―having the inner shape of the connection pipe―introduced into the cavity.

Since the mould part with the cavity cannot be split to remove the connection pipe, the connection pipe is extracted therefrom, still in a hot state, by moving the mould part in axial direction. This means that the external bead is forced through a mould portion having the shape of the cylindrical tube, i.e. having narrower dimensions than the external bead. Such a forced extraction generally causes a deformation of the annular bead and typically results in an ovalisation of the connection pipe after cooling off, which thus exhibits a poor roundness. This loss of rotational symmetry of the bead portion and of the tube is disadvantageous, as it is will result in leakage at the pipe to hose connection. Another factor responsible for this loss of symmetry is the heterogeneous distribution and orientation of the reinforcing fibers throughout the connection pipe, whereby the connection pipe has regions with varying stiffness, which contributes to an asymmetrical deformation of the connection pipe.

This problem of poor roundness encountered with connection pipes forcedly extracted from the mould cavity is even more important in high pressure cooling circuits

US 4,879,043 discloses a process for moulding a tubular portion without mismatch in its outer surface due to mould parting lines, the tubular portion being provided with an annular bead at a terminal end thereof. A mould is provided as a one-piece part having a cavity formed with a cylindrical surface portion inside and a core member inserted endwise in a removable manner into the cylindrical surface portion. After molten plastic is injected into the mould and before it has completely solidified, the core member is withdrawn in an axial direction from the cylindrical surface portion. This allows the moulded part to shrink inwardly in radial direction and to separate from the cavity formed by the cylindrical surface portion. Thereafter, the moulded tubular shape and the cylindrical surface portion are moved away relative to each other in axial direction with the tubular portion flexing to whatever extent is necessary in order to clear the mould. The inner surface of the annular bead is provided with alternating ridges and grooves so as to eliminate a continuous inner surface thereby forming a substantially symmetrical saw tooth shape over the whole inner surface.

### Object of the invention

The object of the present invention is to provide an injection moulding process, which allows to produce connection pipes having an improved roundness. This object is achieved by a process as claimed in claim 1.

### Summary of the invention

The present invention concerns a process for injection moulding a connection pipe made of a thermoplastic and comprising a cylindrical tube of circular cross-section provided at one end with an external annular bead having a rotational symmetry. According to the process of the invention, a liquid thermoplastic is injected into a mould cavity having the form of the connection pipe, and is allowed to solidify. The mould cavity is preferably formed by a mould part having a cavity therein and by an internal pin introduced into the cavity. The moulded connection pipe is then forcedly extracted from the mould cavity while it is still hot, whereby the connection pipe loses its rotational symmetry due to the deformation of the external bead. According to an important aspect of the invention, the wall of the cylindrical tube has local thickness reinforcements on its inner surface, which are designed so as to restore the rotational symmetry of the connection pipe during its cooling off.

The local thickness reinforcements of the wall of the tube will tend to restore the circularity of the tube due to shrinkage of the thermoplastic during cooling off. Indeed, a local thickness reinforcement placed centrally on the inner surface of an incurved plastic part will tend to reduce the opening defined by this incurved part, due to the shrinkage effect of the plastic part during cooling off. It follows that if the local thickness reinforcements are properly positioned on the inner surface of the tube, it is possible to restore the rotational symmetry of the cylindrical tube, and hence that of the external bead.

In order to restore the circularity of an ovalised connection pipe, the local thickness reinforcements should be placed along the minor axis of the oval. Since the thickness reinforcements tend to close the curved part on which they are located, they will cause the major axis of the oval to decrease, and the minor axis to increase, whereby the general rotational symmetry of the pipe can be restored. Hence, the connection pipes produced with the present process have an improved rotational symmetry and thus an improved roundness.

It will be understood that a first merit of the invention is to have found that, in a given injection moulding process, the deformation of the pipe always occurs in the same way. Another merit of the present invention is to use the properties of the plastic material, i.e. the shrinkage occurring during cooling off, in order to correct the deformation inherent to such processes. Such a modification of the internal shape of the connection pipe can be easily achieved in practice, and proves to be a certainly more convenient solution than trying to modify the mould part defining the outer shape of the connection pipe.

As mentioned, to correct an ovalisation of the connection pipe, the cylindrical tube is advantageously provided with two diametrically opposed thickness reinforcements, preferably placed on the minor axis of the oval to be corrected.

In a preferred embodiment, the local thickness reinforcements extend axially from the junction with the annular bead and over a predetermined length, on the inner surface of the cylindrical tube.

As the local thickness reinforcements are intended to correct a systematic defect occuring in conventional injection moulding processes, the local thickness reinforcements will preferably be designed based on test results with connection pipes having a cylindrical tube with uniform thickness. It is however also possible, when having substantial experience in injection moulding, to use calculus programs and/or computerised simulation for determining the position of the local thickness reinforcements.

In particular for automobile related applications, it is advantageous to make the connection pipe from a dimensionally stable, heat and hydrolysis resistant thermoplastic. Such thermoplastics are known, as it the application of a number of them for shell tanks.

Highly suitable thermoplastics are polyamides, notably aliphatic polyamides such as polyamide 4,6 and 6,6 and partially aromatic polyamides such as terephthalic acidebased and isophthalic acid-based polyamides. Such polyamides may be employed as homopolymer, copolymer or mixtures thereof. Preferably, polyamide 4,6 and 6,6 or optionally mixed or copolymerised with another polyamide, are used.

The thermoplastic preferably contains a reinforcing filler, e.g. a fibrous material, preferably glass fibers and/or a mineral filler, e.g. clay, glass beads, mica. Furthermore, the thermoplastic may contain common additives such as hydrolysis stabilisers, colouring agents, pigments, impact strength improving agents, mould release agents and the like.

The process of the present invention can be advantageously implemented in a process for manufacturing shell tanks for radiators for vehicle engine coolant circuits. The improved rotational symmetry of the connection pipe will ensure a fluidtight sealing at the pipe to hose connection. This is particularly interesting for high pressure coolant circuits where leakage at the pipe to hose connection are to be avoided.

According to another aspect of the invention, a connection pipe made of a thermoplastic is proposed. The connection pipe comprises a cylindrical tube provided at one end with an external annular bead. It shall be appreciated that the wall of the cylindrical tube has local thickness reinforcements on its inner surface, which are designed to ensure the rotational symmetry of the pipe. This object is achieved by an injection moulded connection pipe as claimed in claim 9.

Such a connection pipe exhibits an improved rotational symmetry―or improved roundness―and thus allows a fluidtight connection to a rubber hose pulled over it. A screw clamp may be used to further improve the sealing and to secure the rubber hose onto the tube of the connection pipe.

### Brief description of the drawings

The present invention will now be described, by way of example, with reference to the accompanying drawings, in which:
- Fig.1:: is a front view of a preferred embodiment of a connection pipe according to the invention;
- Fig.2:: is a section view along line A-A of the connection pipe of Fig.1;
- Fig.3:: is a sketch of an ovalized pipe having a uniform thickness;
- Fig.4:: is a sketch of a pipe provided with local thickness reinforcements.

In the Figures, same reference numbers indicate similar or identical elements.

### Detailed description of a preferred embodiment

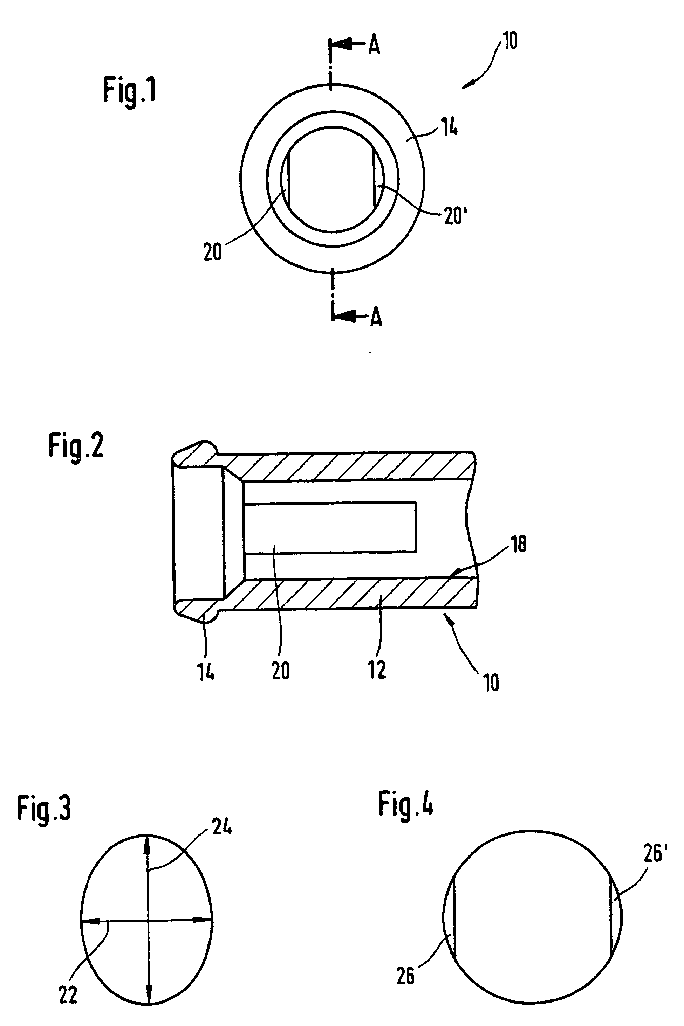

A preferred embodiment of a connection pipe 10 according to the present invention is shown in the Figs., wherein Fig.1 illustrates a front view of the connection pipe 10 and Fig.2 is a sectional view along line A-A of the connection pipe 10 shown in Fig.1. The connection pipe 10 comprises a cylindrical tube 12 having a circular cross-section and a cylindrical outer surface. The cylindrical tube 12 is provided at one end with an external annular bead 14 having a rotational symmetry. Such a connection pipe 10 is typically made of a thermoplastic and manufactured by injection moulding. Although a variety of thermoplastics can be used, polyamide is preferred. Moreover, the thermoplastic shall advantageously comprise reinforcing material, preferably glass fibers.

It shall be appreciated that the cylindrical tube 12 of the connection pipe 10 has on its inner surface 18, two local thickness reinforcements 20, 20'. These local thickness reinforcements 20, 20' allow to restore the rotational symmetry of the pipe 10, which is typically deformed when extracted from the mould cavity in which it is produced.

The effects and advantages of these thickness reinforcements 20, 20' will now be described with respect to the following description of a preferred process of manufacturing a connection pipe by injection moulding.

The moulding of the connection pipe 10 is preferably carried out in a mould cavity comprising a mould part and an internal pin. The mould part has a cavity therein, which has the external dimensions of the connection pipe 10. Hence, this cavity shall comprise a tubular section to define the outer shape of the cylindrical tube 12 and an undercut section to define the shape of the external annular bead 14. The internal pin has the inner shape of the connection pipe 10. This internal pin has a first section for defining the inner shape of the external bead 14 and a second section for defining the inner shape of the cylindrical tube 12. Hence, the second section of the cylindrical tube is essentially cylindrical and has two diametrically opposed flat parts, which form the two thickness reinforcements. Upon introduction of the internal pin into the cavity of the mould part, a mould cavity having the shape of the connection pipe is formed.

It will be understood that in case such a connection pipe is to be integrally moulded with a larger moulded element, e.g. a shell tank of a radiator for an engine, the mould part and the internal pin will be part of a moulding system comprising other mould parts for forming the larger element.

According to the present process, a charge of liquid thermoplastic is injected into the mould cavity―formed by the mould part cavity and the internal pin―and the thermoplastic is allowed to solidify therein.

In order to remove the moulded connection pipe 10 from the mould cavity, the mould part having the cavity and the internal pin are moved in axial direction, and away from the tube towards the annular bead (i.e. from right to left with respect to Fig.2). Indeed, the mould part having the cavity is made of one block, and cannot be split. Moreover, since the connection pipe is generally connected-at the end opposed to the annular bead―to a larger moulded element, the mould part and the internal pin cannot be moved axially towards the larger moulded element.

During this extraction, the annular bead 14 is made to pass through a section of the cavity having the shape of the cylindrical tube 12, which has narrower dimensions than the external bead 14. Therefore, the extraction of the connection pipe 10 is carried out while it is still hot―at about 90°C for fiber glass reinforced polyamide-by forcedly removing the mould part and the internal pin. This causes the deformation of the annular bead 14 and of the tube 12, whereby the connection pipe 10 loses its rotational symmetry.

However, it will be appreciated that, due to the shrinkage effect of the plastic during cooling off, the local thickness reinforcements 20, 20' on the inner surface of the tube will tend to restore the rotational symmetry of the connection pipe. Thus the present process produces connection pipes having an improved roundness, which ensures a fluidtight sealing with a rubber hose pulled over it.

The position of these local thickness reinforcements is preferably based on test results obtained by manufacturing connection pipes with a uniform thickness, i.e. without local thickness reinforcements. As a matter of fact, a merit of the present invention is to have observed that when connection pipes with a uniform thickness are manufactured in a process wherein the pipe is deformed during extraction, the deformation always occurs in the same way, and typically results in an ovalisation of the pipe.

Furthermore, another merit of the invention is to use the properties of the material from which the connection pipe 10 is made to correct a loss of rotational symmetry. Indeed, a local thickness reinforcement placed centrally on the inner surface of an incurved plastic part will tend to reduce the opening defined by this incurved part, due to the shrinkage effect during cooling off of the plastic part.

Hence, the local thickness reinforcements should preferably be aligned along the minor axis of the oval of the deformed pipe. Due to the shrinkage effect during cooling off, the local thickness reinforcements will tend to reduce the large axis of the oval and increase the minor axis of the oval, and will restore the circularity of the tube, and thus that of the annular bead. As a result, the rotational symmetry of the connection is restored during cooling off.

This effect will now be explained with the help of Figs. 3 and 4. Fig.3 schematically illustrates a pipe having a uniform thickness, which has been ovalized as a result of the forced extraction from the mould cavity. Arrow 22 indicates the minor axis of this oval and arrow 24 indicates the major axis of this oval. Fig.4 schematically illustrates a pipe having two thickness reinforcements 26, 26' on its inner surface. The position of these thickness reinforcements 26, 26' has been determined based on the deformation of the pipe shown in Fig.3. As can be seen, the thickness reinforcements in Fig.4 are aligned along the minor axis 22 of the oval defined by the pipe of Fig.3.

It is to be noted that the thickness reinforcements 20, 20' of the connection pipe 10 should preferably extend axially, and over a predetermined length, from the junction with the annular bead 14 towards the inside of the tube 12, as can be seen in Fig.2.

Besides, in the present embodiment, the thickness reinforcements 20, 20' define a flat surface inside the tube 12, but they could as well have another shape. For example, they could define an incurved surface so that the tube 12 would have a kind of ellipsoidal cross-section at its reinforced section.

In order to limit the deformation of the connection pipe 10 at extraction, the removal from the mould is advantageously done by firstly retracting the internal pin from the inside of the cavity in the mould part, until the section defining the inner shape of the cylindrical tube is at the height of the external bead 14. In such a configuration, an annular space is formed under the annular bead 14. Then the mould part and the internal pin are removed simultaneously. Hence, when the annular bead is made to pass though the section of the cavity defining the cylindrical tube 12, it is forced into this annular space.

## Claims

1. A process for injection moulding a connection pipe (10) made of a thermoplastic, said connection pipe comprising a cylindrical tube (12) of circular cross-section provided at one end with an external annular bead (14) having a rotational symmetry, said process comprising the following steps:
injecting a charge of liquid thermoplastic into a mould cavity having the form of said connection pipe (10), and allowing it to solidify;
forcedly extracting the moulded connection pipe from said mould cavity while it is still deformable, whereby said connection pipe loses its rotational symmetry;
**characterised in that**
the wall of said cylindrical tube (12) has local thickness reinforcements on its inner surface which are designed so as to restore the rotational symmetry of said connection pipe during its cooling off.

2. The process according to claim 1, **characterised in that** said cylindrical tube has two diametrically opposed local thickness reinforcements (20, 20').

3. The process according to claim 1 or 2, **characterised in that** said local thickness reinforcements (20, 20') extend from the junction with said annular bead over a predetermined length on said inner surface (18) of said cylindrical tube (12).

4. The process according to any one of the preceding claims, **characterised in that** said local thickness reinforcements (20, 20') have been designed based on test results with connection pipes (10) having a cylindrical tube (12) with uniform thickness.

5. The process according to any one of the preceding claims, **characterised in that** said connection pipe (10) is made of a reinforced thermoplastic.

6. The process according to claim 5, **characterised in that** said connection pipe (10) is made of a fiber glass reinforced polyamide.

7. The process according to any one of the preceding claims, **characterised in that** said mould cavity is defined by a mould part having a cavity therein, in which an internal pin is introduced.

8. A process for integrally injection moulding a connection pipe (10) with a shell tank of a radiator for an engine cooling circuit, wherein said connection pipe is injection moulded according to the process defined in any one of the preceding claims.

9. An injection moulded connection pipe (10) made of a thermoplastic comprising a cylindrical tube (12) of circular cross-section provided at one end with an external annular bead (14) having a rotational symmetry, **characterised in that** the wall of said cylindrical tube has local thickness reinforcements on its inner surface.

10. The injection moulded connection pipe (10) according to claim 9, **characterised in that** said cylindrical tube has two diametrically opposed local thickness reinforcements (20, 20').

11. The injection moulded connection pipe (10) according to claim 9 or 10, **characterised in that** said local thickness reinforcements (20, 20') extend from the junction with said annular bead (14) over a predetermined length on the inner surface (18) of said cylindrical tube (12).

12. The injection moulded connection pipe (10) according to claim 9, 10 or 11, **characterised in that** said connection pipe (10) is made of a reinforced thermoplastic, preferably a fiber glass reinforced polyamide.

## Patentansprüche

1. Verfahren zum Spritzgießen eines aus einem Thermoplast bestehenden Anschlussrohrs (10), wobei das Anschlussrohr ein Zylinderrohr (12) mit kreisförmigem Querschnitt umfasst, das an einem Ende mit einem rotationssymmetrischen Außenringwulst (14) versehen ist, wobei das Verfahren folgende Schritte umfasst:
Einspritzen einer Charge flüssigen Thermoplastes in ein Formnest, das die Form des Anschlussrohrs (10) aufweist, und Erstarrenlassen des Thermoplastes;
Herauszwängen des geformten Anschlussrohrs aus dem Formnest, während es noch verformbar ist, wodurch das Anschlussrohr seine Rotationssymmetrie verliert;
**dadurch gekennzeichnet, dass**
die Wand des Zylinderrohrs (12) lokale Dickenverstärkungen an dessen Innenfläche aufweist, die so ausgelegt sind, dass die Rotationssymmetrie des Anschlussrohrs während dessen Abkühlung wiederhergestellt wird.

2. Verfahren nach Anspruch 1, **dadurch gekennzeichnet, dass** das Zylinderrohr zwei diametral gegenüberliegende lokale Dickenverstärkungen (20, 20') aufweist.

3. Verfahren nach Anspruch 1 oder 2, **dadurch gekennzeichnet, dass** sich die lokalen Dickenverstärkungen (20, 20') von der Verbindungsstelle mit dem Ringwulst aus über eine vorbestimmte Länge an der Innenfläche (18) des Zylinderrohrs (12) erstrecken.

4. Verfahren nach irgendeinem der vorangehenden Ansprüche, **dadurch gekennzeichnet, dass** die lokalen Dickenverstärkungen (20, 20') basierend auf Testergebnissen mit Anschlussrohren (10) ausgelegt wurden, die ein Zylinderrohr (12) mit gleichmäßiger Dicke aufweisen.

5. Verfahren nach irgendeinem der vorangehenden Ansprüche, **dadurch gekennzeichnet, dass** das Anschlussrohr (10) aus einem verstärkten Thermoplast besteht.

6. Verfahren nach Anspruch 5, **dadurch gekennzeichnet, dass** das Anschlussrohr (10) aus einem glasfaserverstärkten Polyamid besteht.

7. Verfahren nach irgendeinem der vorangehenden Ansprüche, **dadurch gekennzeichnet, dass** das Formnest durch einen Formwerkzeugteil mit einem inneren Hohlraum definiert wird, in den ein Innenstift eingeführt wird.

8. Verfahren zum integrierten Spritzgießen eines Anschlussrohrs (10) mit einem Kühlerkasten eines Kühlers für einen Verbrennungsmotor-Kühlkreislauf, wobei das Anschlussrohr nach dem in irgendeinem der vorangehenden Ansprüche definierten Verfahren spritzgegossen wird.

9. Spritzgegossenes Anschlussrohr (10) aus einem Thermoplast, umfassend ein Zylinderrohr (12) mit kreisförmigem Querschnitt, das an einem Ende mit einem rotationssymmetrischen Außenringwulst (14) versehen ist, **dadurch gekennzeichnet, dass** die Wand des Zylinderrohrs lokale Dickenverstärkungen an dessen Innenfläche aufweist.

10. Spritzgegossenes Anschlussrohr (10) nach Anspruch 9, **dadurch gekennzeichnet, dass** das Zylinderrohr zwei diametral gegenüberliegende lokale Dickenverstärkungen (20, 20') aufweist.

11. Spritzgegossenes Anschlussrohr (10) nach Anspruch 9 oder 10, **dadurch gekennzeichnet, dass** sich die lokalen Dickenverstärkungen (20, 20') von der Verbindungsstelle mit dem Ringwulst (14) aus über eine vorbestimmte Länge an der Innenfläche (18) des Zylinderrohrs (12) erstrecken.

12. Spritzgegossenes Anschlussrohr (10) nach Anspruch 9, 10 oder 11, **dadurch gekennzeichnet, dass** das Anschlussrohr (10) aus einem verstärkten Thermoplast und vorzugsweise aus einem glasfaserverstärkten Polyamid besteht.

## Revendications

1. Procédé de moulage par injection d'un tuyau de raccordement (10) réalisé en matière thermoplastique, ledit tuyau de raccordement comprenant un tube cylindrique (12) de section circulaire muni à une extrémité d'un boudin annulaire externe (14) présentant une symétrie rotationnelle, ledit procédé comprenant les étapes suivantes consistant à :
injecter une charge de matière thermoplastique liquide dans une cavité de moule ayant la forme dudit tuyau de raccordement (10) et lui permettre de se solidifier;
extraire de manière forcée le tuyau de raccordement moulé de ladite cavité de moule pendant qu'il est encore déformable, moyennant quoi ledit tuyau de raccordement perd sa symétrie rotationnelle;
**caractérisé en ce que**
la paroi dudit tube cylindrique (12) possède des renforts d'épaisseur locaux sur sa surface intérieure, qui sont conçus pour restaurer la symétrie rotationnelle dudit tuyau de raccordement durant son refroidissement.

2. Procédé selon la revendication 1, **caractérisé en ce que** ledit tube cylindrique possède deux renforts d'épaisseur locaux diamétralement opposés (20, 20').

3. Procédé selon la revendication 1 ou 2, **caractérisé en ce que** lesdits renforts d'épaisseur locaux (20, 20') s'étendent depuis la jonction avec ledit boudin externe sur une longueur prédéterminée sur ladite surface intérieure (18) dudit tube cylindrique (12).

4. Procédé selon l'une quelconque des revendications précédentes, **caractérisé en ce que** lesdits renforts d'épaisseur locaux (20, 20') ont été conçus sur la base de résultats d'essai avec des tuyaux de raccordement (10) possédant un tube cylindrique (12) d'une épaisseur uniforme.

5. Procédé selon l'une quelconque des revendications précédentes, **caractérisé en ce que** ledit tuyau de raccordement (10) est réalisé en matière thermoplastique renforcée.

6. Procédé selon la revendication 5, **caractérisé en ce que** ledit tuyau de raccordement (10) est réalisé en polyamide renforcé par des fibres de verre.

7. Procédé selon l'une quelconque des revendications précédentes, **caractérisé en ce que** ladite cavité de moule est définie par une pièce de moule comportant en son sein une cavité, dans laquelle est introduit un axe interne.

8. Procédé de moule par injection d'un seul tenant d'un tuyau de raccordement (10) avec un réservoir à calandre d'un radiateur pour un circuit de refroidissement de moteur, dans lequel ledit tuyau de raccordement est moulé par injection conformément au procédé défini selon l'une quelconque des revendications précédentes.

9. Tuyau de raccordement moulé par injection (10) réalisé en matière thermoplastique comprenant un tube cylindrique (12) de section circulaire muni à une extrémité d'un boudin annulaire externe (14) présentant une symétrie rotationnelle, **caractérisé en ce que** la paroi dudit tube cylindrique possède des renforts d'épaisseur locaux sur sa surface intérieure.

10. Tuyau de raccordement moulé par injection (10) selon la revendication 9, **caractérisé en ce que** ledit tube cylindrique possède deux renforts d'épaisseur locaux diamétralement opposés (20, 20').

11. Tuyau de raccordement moulé par injection (10) selon la revendication 9 ou 10, **caractérisé en ce que** lesdits renforts d'épaisseur locaux (20, 20') s'étendent depuis la jonction avec ledit boudin annulaire (14) sur une longueur prédéterminée sur la surface intérieure (18) dudit tube cylindrique (12).

12. Tuyau de raccordement moulé par injection (10) selon la revendication 9, 10 ou 11, **caractérisé en ce que** ledit tuyau de raccordement (10) est réalisé en matière thermoplastique renforcée, de préférence un polyamide renforcé par des fibres de verre.
